# DEMANDE DE BREVET EUROPEEN

(11) **EP 1 052 517 A1**
(43) Date de publication de la demande: **15.11.2000**
(21) Numéro de dépôt: 00401071.6
(22) Date de dépôt: 18.04.2000
(51) Int. Cl.: G01P 15/12, G01P 1/02, B60R 21/00

(54) **Dispositif de mésure de la variation d'accélération d'une structure lors d'un choc**

(30) Priorité: 23.04.1999 FR 9905205
(71) Demandeur: Matra Bae Dynamics France, 75116 Paris (FR)
(72) Inventeur: Goossens, Jean-Paul, 33127 Martignas sur Jalle (FR)
(74) Mandataire: Fort, Jacques

(57) **Abrégé**

Le dispositif de mesure de l'accélération d'une structure au cours d'un choc comprend un support destiné à être fixé à la structure et un accéléromètre miniature monolithique (10), comportant un substrat et une masse sismique munie de moyens de mesure piézo-résistifs. Un circuit de mesure et de traitement de signal (20, 22) dont l'horloge est fournie par un montage RC (30)fournit une indication d'accélération. Un circuit d'alimentation comporte des condensateurs (14) de stockage d'énergie, reliés à une source extérieure (12), destructible lors d'un choc, par des moyens (12) à conduction unidirectionnelle de protection.

## Description

La présente invention concerne les dispositifs de mesure de paramètres lors du choc d'une structure contre un obstacle. Plus précisément, l'invention vise à fournir un dispositif capable de résister au choc et de fournir des informations significatives sur l'évolution du choc, et notamment la décélération subie par la structure à l'emplacement de cette dernière où se trouve le dispositif . L'invention a de très nombreuses applications, aussi bien dans le domaine industriel que dans le domaine militaire.

Dans le domaine industriel, et notamment en automobile, il est important d'obtenir et de mémoriser des données exploitables sur l'évolution des accélérations subies par divers éléments de la structure à la suite d'un impact. A l'heure actuelle, on utilise notamment dans ce but des procédés optiques, consistant à filmer, à l'aide de caméras ultra rapides, la structure sur laquelle on a préalablement porté des repères. L'exploitation des résultats est lourde et de plus il n'est pas possible d'utiliser le procédé pour déterminer les accélérations et les déplacements dans des endroits cachés.

Dans le domaine de l'armement, les fusées équipant les bombes et engins destinés à exploser après avoir traversé une paroi de protection sont à l'heure actuelle munies d'une fusée à retard réglable. Une telle fusée est en défaut lorsque la paroi de protection est doublée d'une pré-défense. Au contraire, une fusée capable de déceler la cessation du freinage par suite de la traversée d'une ou plusieurs parois rendrait inefficace ce genre de contre-mesure.

Il s'agit là d'un problème de mesure, et non pas de détection instantanée, de dépassement d'un seuil, notamment pour le déclenchement d'un coussin gonflable (air bag). Un tel détecteur est décrit dans le document US-A-6 567 880. Il comporte, pour chaque direction de détection, un capteur accélérométrique piézo résistif et des circuits comparateurs. Il n'y a pas de circuit de traitement. Un générateur d'horloge n'a pour fonction que de décaler les signaux provenant des différents capteurs.

L'invention propose, pour atteindre les résultats recherchés, un dispositif de mesure de l'accélération d'une structure au cours d'un choc suivant la revendication 1.

L'accéléromètre sera généralement en silicium monocristallin. Le substrat est avantageusement emprisonné sur le support entre des amortisseurs de filtrage des vibrations mécaniques à haute fréquence.

Les composants électroniques seront généralement montés en surface et en boîtier plastique ; ils seront « collés », par exemple à l'araldite. L'ensemble ainsi constitué est noyé dans un enrobage.

Le circuit de mesure et de traitement de signal peut notamment être prévu pour effectuer un échantillonnage, une numérisation et une détection d'enveloppe permettant de déduire, de la mesure d'accélération, la vitesse et, par une nouvelle intégration, le déplacement. Ce mode de traitement est notamment utilisable pour provoquer une mise à feu après traversée de paroi(s).

Dans le cas d'un dispositif dont les résultats sont destinés à être exploités ultérieurement, le circuit de mesure et de traitement de signal est associé à une mémoire non volatile telle qu'une mémoire morte programmable permettant ultérieurement d'analyser en détail l'évolution de l'accélération au cours du temps.

L'invention sera mieux comprise à la lecture de la description qui suit de modes avantageux de réalisation donnés à titre d'exemple non limitatif. La description se réfère aux dessins qui l'accompagnent, dans lesquels :
- la figure 1 est un schéma synoptique de principe du dispositif ;
- la figure 2 est une représentation simplifiée, en coupe, d'un dispositif conforme au schéma de la figure 1 ; et
- la figure 3 est un schéma de montage d'un composant.

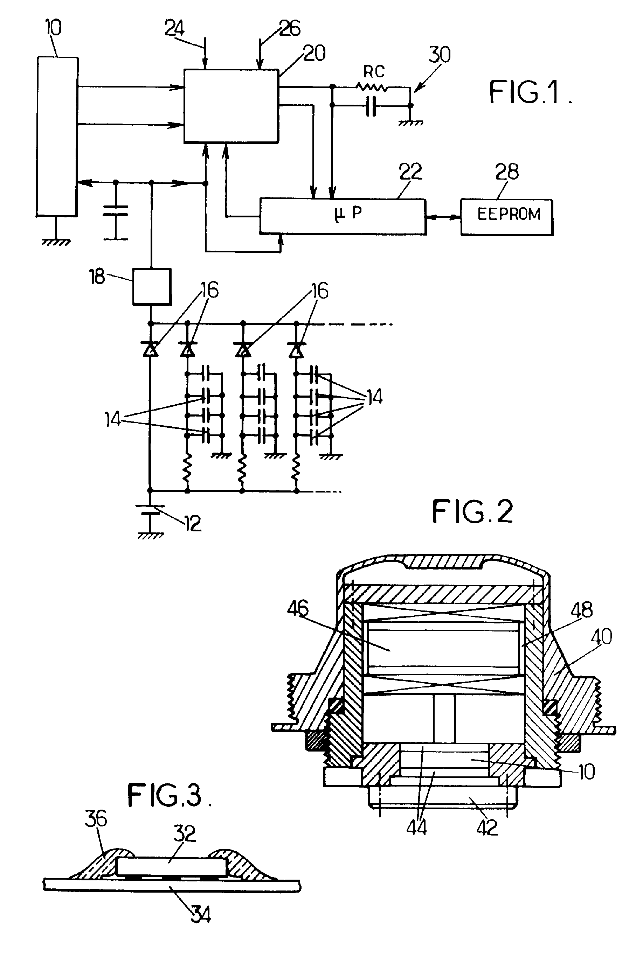

Le dispositif montré à titre d'exemple en figure 1 comporte un capteur accélérométrique 10 qui sera généralement prévu pour fournir les accélérations suivant un axe sensible unique. Etant donné que les chocs s'accompagnent toujours de vibrations à fréquences élevées, il sera souhaitable d'utiliser un capteur ayant une fréquence de résonnance propre dépassant 100 kHz. On peut notamment utiliser un capteur monolithique en silicium monocristallin à mesure piézo-résistive, dont un exemple de réalisation sera décrit plus loin. Ce capteur est alimenté à partir d'une source 12, qui sera généralement une simple pile, par l'intermédiaire d'un circuit de stockage d'énergie formée par des réseaux de condensateurs 14, capable de fournir la puissance électrique nécessaire au fonctionnement des différents éléments du dispositif pendant quelques dizaines de milliseconde, après rupture de la liaison avec la source. Il peut notamment s'agir de condensateurs au tantale. Les réseaux de condensateurs sont reliés à la source 12 par des diodes de protection 16. La source 12 et sa diode 16 peuvent être reliées par un fil qui sera rompu lors de la décélération brutale au début du choc. En revanche, les liaisons électriques en aval de la diode seront constituées par des pistes déposées sur un substrat et capables de supporter des accélérations et des vibrations importantes.

La source et les condensateurs alimentent le capteur et les autres circuits par l'intermédiaire d'un régulateur de tension 18.

Le dispositif comporte un circuit de mesure et de traitement de signal constitué, dans le mode de réalisation décrit, par un circuit de mise à l'échelle et de filtrage 20 et par un microprocesseur ou microcontrôleur 22. Le circuit 20 comporte des entrées 24 et 26 permettant respectivement de préprogrammer un filtrage et un gain, en fonction notamment de la cadence d'échantillonnage prévue et de la sensibilité du capteur 10. Le filtrage permet d'écarter les fréquences de vibration élevées et de respecter les critères de Shanon. Le circuit 20 peut être purement analogique, l'échantillonnage étant effectué en aval, ou réaliser un échantillonnage et une numérisation permettant un filtrage numérique.

Le microprocesseur ou micro contrôleur 22 reçoit le signal de sortie du circuit 20 et de plus commande son fonctionnement. Il est associé à une mémoire 28 qui est avantageusement une mémoire morte programmable et effaçable, notamment lorsque l'on souhaite enregistrer les données fournies pour une exploitation ultérieure.

Etant donné la fragilité des quartz de référence de fréquence, l'horloge nécessaire au cadencement sera généralement constituée par un circuit RC 30.

Le mode de montage des composants électroniques, et notamment du circuit 20 et du microprocesseur 22, doit être tel que ces circuits ou leurs liaisons ne s'arrachent pas lors d'un choc. Pour cela, on peut adopter diverses mesures. Une première mesure consiste à placer les composants, tels que le composant 32 sur la figure 3, de façon que la décélération tende à les plaquer contre leur support 34 et non pas à les arracher. Les liaisons entre les composants et les plages de liaison sur le support doivent être effectuées par soudage direct, en utilisant une technologie de montage en surface, dite CMS et non pas par l'intermédiaire de fils. Les composants peuvent être solidarisés de leur support 34 par un collage 36 débordant sur les bords de façon à constituer une carapace de protection, et cela avant dépôt d'un vernis.

On utilisera des composants sous boîtier plastique plutôt qu'en boîtier céramique. Enfin, l'ensemble des circuits peut être enrobé dans une résine polymérisée, telle que l'araldite.

Le dispositif de mesure, dans son ensemble, est intégré dans un boîtier résistant indéformable en adoptant par exemple la disposition montrée en figure 2. Tous les composants sont placés dans un boîtier de protection 40 en plusieurs pièces assemblées, présentant une bride filetée de fixation sur une structure. Le capteur accélérométrique 10 est maintenu dans le boîtier ainsi constitué par une plaque 42. L'accéléromètre est encadré par deux couches 44 d'élastomère de filtrage des hautes fréquences contenues dans l'impulsion lors du choc. Si l'on souhaite mesurer les accélérations dans plusieurs orientations différentes, plusieurs accéléromètres ayant des axes sensibles croisés peuvent être empilés dans le boîtier.

La carte ou les cartes 46 portant les composants électroniques sont elles aussi placées dans le boîtier et éventuellement protégées contre l'écrasement par une bague métallique 48.

On peut indiquer, à titre d'exemple, que le dispositif permettant de mesurer des accélérations allant jusqu'à 35.000 g a été réalisé, avec enregistrement d'un paramètre en mémoire flash. Le déclenchement du début de l'enregistrement pouvait être provoqué par l'ouverture d'une boucle électrique. Pour une fréquence d'échantillonnage de 22.700 points par seconde, avec numérisation de chaque point de mesure sur 8 bits, la fréquence de coupure du filtre anti-repliement était de 7,5 kHz. L'échantillonnage était effectué de façon permanent dès le début de l'essai, et en mémorisation immédiate.

Les essais ont fait apparaître des vibrations à très haute fréquence superposées à la décélération, présentant elle-même des fluctuations. Les oscillations à fréquences les plus élevées sont éliminées mécaniquement par le capteur ou électriquement par le filtre anti-repliement. Il restait cependant nécessaire d'effectuer une détection d'enveloppe, réalisée numériquement par le microprocesseur 22.

Pour une application particulière, le microprocesseur est également programmé pour calculer en temps réel la vitesse et la distance parcourue, par une double intégration. Le microprocesseur peut être prévu pour commander une mise à feu une fois une distance déterminée parcourue ou en réponse à un autre critère, tel que le passage de la décélération au-dessous d'un niveau déterminé.

## Revendications

1. Dispositif de mesure de l'accélération d'une structure au cours d'un choc, comprenant :
- un support destiné à être fixé à la structure,
- un accéléromètre miniature monolithique (10), comportant un substrat et une masse sismique munie de moyens de mesure, piézo-résistifs,
- un circuit de mesure et de traitement de signal (20, 22) dont l'horloge est fournie par un montage RC (30), et
- un circuit d'alimentation comportant des condensateurs (14) de stockage d'énergie, reliés à une source extérieure (12), destructible lors d'un choc, par des moyens (12) à conduction unidirectionnelle de protection.

2. Dispositif selon la revendication 1, caractérisé en ce que l'accéléromètre est en silicium monocristallin.

3. Dispositif selon la revendication 1 ou 2, caractérisé en ce que les condensateurs (14) sont au tantale, montés en parallèle et reliés à la source et à la masse par des diodes et en ce qu'un régulateur de tension (18) est interposé entre les condensateurs et le circuit.

4. Dispositif selon l'une quelconque des revendications 1 à 3, caractérisé en ce que les composants électroniques sont montés en surface et à boîtier plastique retenu par collage (36) débordant sur leur face opposée à celle du support des composants.

5. Dispositif selon la revendication 4, caractérisé en ce que les composants sont noyés dans un enrobage.

6. Dispositif selon la revendication 4 ou 5, caractérisé en ce que les liaisons électriques des composants sont par soudage direct.

7. Dispositif selon l'une quelconque des revendications précédentes, caractérisé en ce que le circuit de mesure et de traitement de signal est prévu pour effectuer un échantillonnage et une numérisation .

8. Dispositif selon la revendication 7, caractérisé en ce que le circuit de mesure et de traitement effectue de plus une détection d'enveloppe suivie d'une double intégration d'obtention de la vitesse et du déplacement.
